# EUROPEAN PATENT APPLICATION

(11) **EP 0 934 838 A1**
(43) Date of publication of application: **11.08.1999**
(21) Application number: 99200306.1
(22) Date of filing: 05.02.1999
(51) Int. Cl.: B60D 1/52

(54) **Hitching device**

(30) Priority: 05.02.1998 NL 1008214
(71) Applicant: Brink B.V., 7951 CX Staphorst (NL)
(72) Inventor: Heida, Jan, 7908 PJ Hoogeveen (NL); Stremmelaar, Egbert Antonie, 7711 DT Nieuwleusen (NL)
(74) Representative: De Hoop, Eric

(57) **Abstract**

Hanging or hitching assembly comprising a housing (2) to be attached to a vehicle and having a receiving space (12), as well as a hanging or hitching part (3) with a hanging or hitching member, such as a towing hook (5) and an elongated coupling end (4) at one end which is destined to be secured in a detachable manner in the receiving space, in which at an inner side the housing is provided with first coupling members (9,10), the coupling end being provided with second coupling members (17,19) cooperating with the first coupling members, the coupling end being provided with a longitudinal bore (15a,b) and a coupling rod (14) which can be slid therein for bringing and keeping the first and second coupling members in coupling cooperation when in the extended position, the coupling end further being provided with first biassing means (20) for forcing the coupling rod (14) into the extended position, as well as a rack (22), which is in toothed engagement with a pinion (60) arranged in the coupling end, which pinion can be rotated by manual operating means (31), the pinion and/or the rack having portions (41,42,43,36,37), which can cooperate in keeping the coupling rod in a first retracted position, counter to the first biassing means.

## Description

The invention relates to a hanging or hitching assembly for a vehicle, in particular a car. It could be about an assembly with a bike carrier or something like that, and in particular a towing hook assembly, with a detachable towing hook part and an attachment part which is destined to be secured to the vehicle. The invention furthermore relates to a hanging or hitching member for use in said assembly.

Such towing hook assemblies are known, for instance from the European patent application 0.223.996 and the German patent application 43.12.208.

In the assembly according to the European patent application 0.223.996 the attachment part is provided with a threshold reaching downwards from an upper wall and opposite and below it a transverse member having a sloping surface. The attachment part is furthermore provided with side walls, in which on the front semi-circular recesses are arranged. The towing hook part has a coupling end, provided with two transverse pins which can fit in the aforementioned semi-circular recesses. Within the coupling end a coupling rod is arranged in a slidable manner, which at the head has a sloping surface which cooperates with aforementioned fixed sloping surface. At the top side the coupling end is furthermore provided with a recess, which can engage about said threshold. At the coupling end a sliding lever is provided, by means of which the coupling rod can be retracted counter to the working of a spring. A locking pawl is hinged onto said sliding lever, which pawl in the locking position abuts a wall of the attachment part. When removing the towing hook part from the housing first the locking pawl has to be rotated and subsequently the coupling rod has to be retracted by rotating the sliding lever. Various locking means are present to lock the locking pawl and the sliding lever against unintentional movement. As a result the known assembly has a rather complex operating member, which is prone to failure and damage and many persons have to operate it with two hands. When taking out the towing hook member use is furthermore made of support on the housing, which may cause danger to the users, when they are present there with their fingers.

The towing hook assembly from the German patent application 43.12.208 has an upright coupling end which can be inserted in the housing of the attachment part. The coupling end is provided with a coupling rod which is under spring tension, which rod at one end is provided with a wedge-shaped head with which locking ball can be forced in engagement with a hole in the housing for locking the towing hook part to the attachment part, and at the other end is provided with a rack, on which a pinion to be operated directly with a turning knob is in engagement. At the rear the towing hook part is provided with a lever under spring tension, which at one end is provided with a sloping surface cooperating with the housing and at some distance from it is provided with a locking pin, which can be reciprocated in an opening in the towing hook part between an unlocked position and a locked position, in which the end of the locking pin engages in a recess in the coupling rod. The towing hook part is detached by rotating the turning knob with the right hand to the right, above over towards the vehicle and thus bringing it downwards counter to the working of the spring in the coupling rod. The aforementioned ball then falls within the coupling end and the towing hook part and can be taken out. Because the aforementioned sloping surface of the lever cooperates with the edge of the housing said lever can bring the locking pin in the recess of the coupling rod under spring tension only when the towing hook part is taken out a little. This requires the appropriate attention of the user.

An object of the invention is to provide a towing hook assembly which at least improves on some of the aforementioned points.

From one aspect the invention to that end provides a hanging or hitching assembly comprising a housing to be attached to a vehicle and having a receiving space, as well as a hanging or hitching member with a hanging or hitching device, such as a towing hook, and an elongated coupling end at one end which is destined to be secured in a detachable manner in the receiving space, in which at an inner side the housing is provided with first coupling members, the coupling end being provided with second coupling members cooperating with the first coupling members, the coupling end being provided with a longitudinal bore and a coupling rod which can be slid therein for bringing and keeping the first and second coupling members in coupling cooperation when in the extended position, the coupling end further being provided with first biassing means for forcing the coupling rod into the extended position, as well as a rack, which is in toothed engagement with a pinion arranged in the coupling end, which pinion can be rotated by manual operating means, the pinion and/or the rack having portions, which can cooperate in keeping the coupling rod in a first retracted position, counter to the first biassing means.

From another aspect the invention provides a hanging or hitching assembly comprising a housing to be attached to a vehicle and having an receiving space, as well as a hanging or hitching member with a hanging or hitching device, such as a towing hook, and at an end an elongated coupling end destined to be secured in the receiving space in a detachable manner, in which at an inner side the housing is provided with first coupling members, the coupling end being provided with second coupling members cooperating with the first coupling members, the coupling end being provided with a longitudinal bore and a coupling rod which can be slid therein for bringing and keeping the first and second coupling members in coupling cooperation when in the extended position, the coupling end further being provided with first biassing means for forcing the coupling rod into the extended position, as well as means to be operated by manual operating means to retract the coupling rod inside counter to the first biassing means, the coupling end being provided with blocking means, for keeping the coupling rod in a first retracted position, which blocking means are operated by the same manual operating means.

From yet another aspect the invention provides a hanging or hitching assembly comprising a housing to be attached to a vehicle and having a receiving space, as well as a hanging or hitching member with a hanging or hitching device, such as a towing hook, and at an end an elongated coupling end destined to be secured in the receiving space in a detachable manner, in which at an inner side the housing is provided with first coupling members, the coupling end being provided with second coupling members cooperating with the first coupling members, the coupling end being provided with a longitudinal bore and a coupling rod which can be slid therein for bringing and keeping the first and second coupling members in coupling cooperation when in the extended position, the coupling end further being provided with first biassing means for forcing the coupling rod into the extended position, as well as means to be operated by manual operating means to retract the coupling rod inside counter to the first biassing means, the coupling rod being provided with blocking means, for keeping the coupling rod in a first retracted position, the blocking means working free from the attachment part.

With the assembly according to the invention a blocking position of a retracted coupling rod is realized with few to no additional means . No particular attention is required from the user when either taking out the hanging or hitching part, or when placing it. Blocking the coupling rod in the retracted position is not impeded by parts of the housing of the attachment part. Furthermore the parts for keeping the coupling rod in the retracted position are screened off, so that their working is reliable for a longer period of time.

Preferably the portions of the teeth on the rack and the pinion are designed to permit mutual slip over a distance, which distance is such that the teeth of the rack and the pinion then facing each other abut on each other. Preferably said distance corresponds to half a pitch of the teeth on the rack. The first biassing means are preferably active for performing the slip movement between the rack and pinion.

Preferably the towing hook assembly comprises second biassing means for rotating the pinion, preferably such that the teeth on the pinion are biassed in the direction corresponding to the working direction of the first biassing means. In this way it is obtained, that when the coupling rod is slid back to a small extent as a result of it being pushed in, the teeth of the pinion and the rack which abutted each other earlier engage again.

From another aspect the coupling rod preferably is provided with locking means for forming a threshold against unintentional sliding of the coupling rod to a second retracted position beyond the first retracted position. In this way it is prevented that the hanging or hitching member is unintentionally uncoupled. For actual uncoupling it will be necessary to pass a threshold. To that end it is provided according to the invention that the locking means on the coupling rod are formed by a first stop surface at the distal end of the rack, which cooperates with a second stop surface on the pinion, the first and the second stop surface being situated outside of the teeth of the pinion and rack, and the pinion is biassed by means of third biassing means to a position in which the first stop surface is in the path of the second stop surface, wherein the pinion can be pressed in counter to the working of the third biassing means in order to bring the path of the second stop surface next to the first stop surface. The second and third biassing means are preferably formed by one means, such as for instance a torsion compression spring.

Preferably the second stop surface is formed on a circumferential edge which projects from the teeth on the pinion, and the rack is provided with an edge for guiding the circumferential edge, as a result of which the pinion and the rack are kept in abutment to each other in a certain manner for optimal mutual working.

Furthermore it is advantageous when the pinion is provided with a third stop surface at the rear of the teeth, which stop surface cooperates with a fourth stop surface on the proximal end of the rack to define an end position for the fully extended coupling rod. In this way it is prevented that the coupling rod, for whatever reason, would go too far through in the movement to the outside.

From another aspect of the invention a hanging or hitching assembly is provided comprising an attachment part to be attached to a vehicle, provided with first coupling means and a hanging or hitching part, such as a towing hook part, provided with second coupling means, which can be brought in cooperative connection with the first coupling means for detachably attaching the hanging or hitching part in the attachment part, locking means further being provided for locking the coupling of the first and the second coupling means and operating means for the locking means comprising a turning knob protruding sidewards and being attached to the hanging or hitching part, which is operatively connected to the locking means in order to bring said locking means out of the locked position when turning the turning knob counter clockwise, in case of a turning knob protruding on the right-hand side above over and towards the hanging or hitching part.

Below the invention will be elucidated on the basis of an exemplary embodiment shown in the attached drawings, in which:
Figures 1A and 1B show a side view and top view, respectively, in partial cross-section, of an exemplary embodiment of the towing hook assembly according to the invention;
Figures 2A and 2B show a side view and a top view, respectively, of a coupling rod accommodated in the towing hook assembly of the figures 1A and 1B;
Figures 3A-3D show a side view, two end views from different sides and a cross-section according to IIIC, respectively, of a pinion accommodated in the towing hook assembly of the figures 1A and 1B;
Figures 4A-4D show a front view and a cross-section, respectively, of an attachment plate for a turning knob of the towing hook assembly of the figures 1A and 1B and a cross-section and a front view of the turning knob attached with the attachment plate;
Figures 5A-5G show consecutive positions of the engagement between the pinion and the coupling rod during detaching the towing hook part from the attachment part;
Figure 6A-6C show consecutive stages of the cooperation between the coupling rod and the pinion during attachment of the towing hook part in the attachment part; and
Figures 7A-7B show a side view and a top view of another embodiment of the towing hook assembly according to the invention, partially in cross-section.

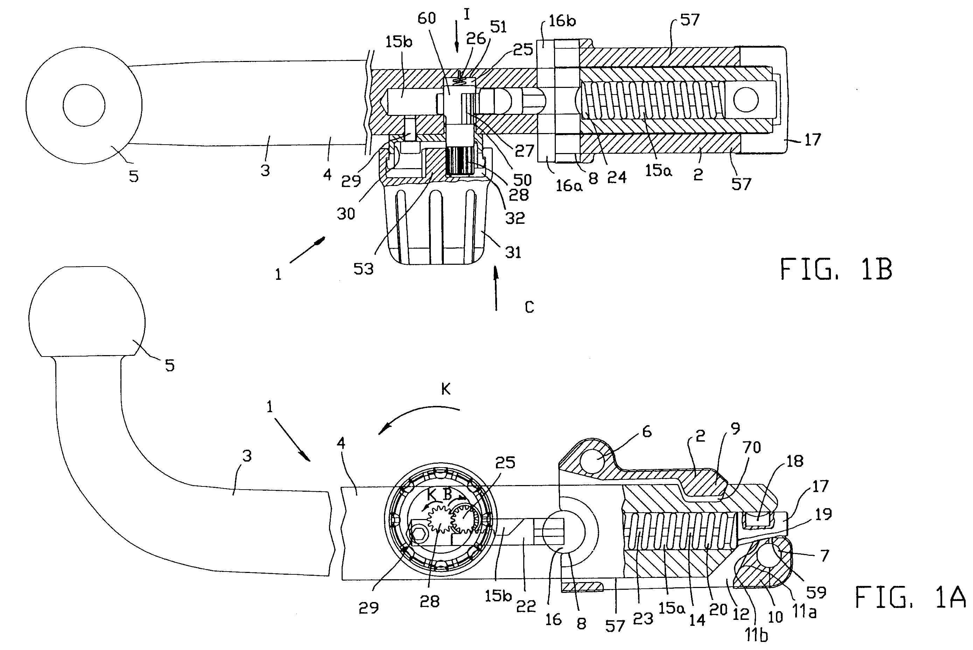

The towing hook assembly 1 of the figures 1A and 1B comprises an attachment part 2 which by means of, bolts not shown and extending through attachment holes 6 and 7, is attached to the frame of a vehicle, and a towing hook part 3, which at the one end is provided with a towing hook having a sphere 5 and at the other end has an elongated coupling end 4.

The attachment part 2 forms a housing, which defines a tubular receiving space 12. In the upper wall of the housing 2 a blocking threshold 9 is provided which projets downwards in the receiving space 12, and at the rear end of the receiving space 12, at the bottom, a transverse member 10 is situated, which is provided with sloping surface 11 a, b. The housing 2 is furthermore provided with side walls 57, which at the front end are provided with semi-circular recesses 8.

The coupling end 4 is provided with a bore 15a, 15b extending in longitudinal direction. In this bore 15a, 15b a coupling rod 14 is arranged, which at the outer, distal end with respect to the coupling end 4, is provided with a head 17, which at the lower side is provided with a sloping surface 59 and at the top side is provided with a recess 18, in which a synthetic cap is placed.

At the proximal side the head 17 is provided with a shoulder 19, against which a compression spring 20 rests. The other end of the compression spring 20 is resting against the annular shoulder 24, which is arranged at the location of the transition between the bore portions 15a and 15b.

The coupling end 4 is furthermore provided with placing pins 16a, 16b which are attached to it and project sideward, which can fit exactly in the semi-circular recesses 8 of the side walls 57 of the attachment part 2. The coupling end 4 is furthermore provided with a recess 70, in which the threshold 9 fits.

At the proximal side of the head 17, the coupling rod 14 merges into a stem 23, which ends into a rack portion 22, which will be further discussed.

A teeth 27 of pinion 60 is placed in engagement with the rack part 22. With one end the pinion 60 is placed in recess 51 in the coupling end 4, is accommodated with its shaft in opening 50 in the coupling end 4, as well as through an opening 61 in attachment plate 30 defined by a wall 61a, and is accommodated in turning knob 31 with its other end and which is provided with teeth 28. The pinion 60, which will be further discussed, is biassed in direction I, by means of torsion compression spring 26, and possibly after rotation in a direction counter to said rotation.

By means of attachment plate 30, which itself is secured to the coupling end 4 by means of attachment bolt 29, the turning knob 31 is attached to said coupling end 4.

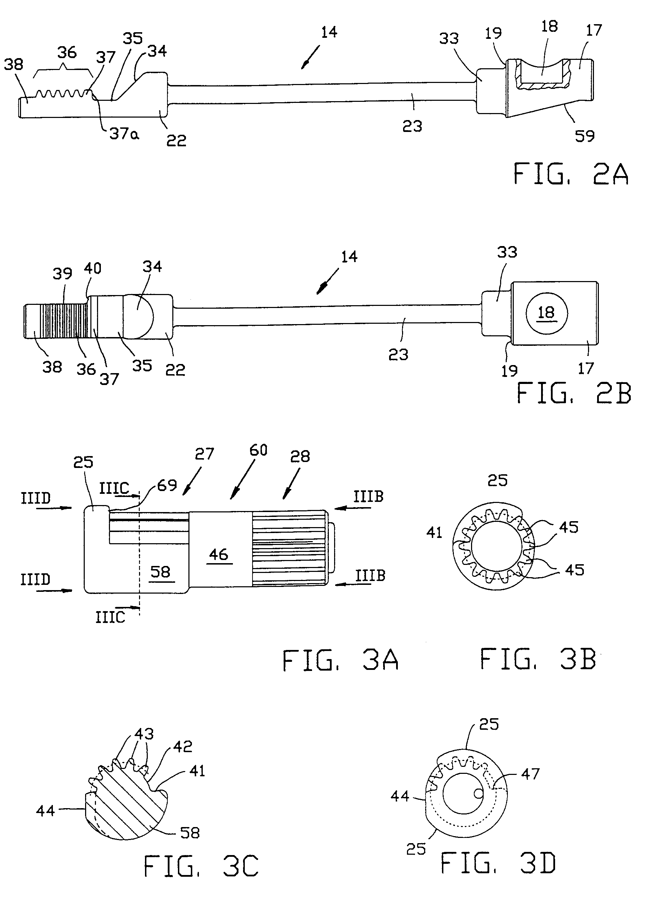

In the figures 2A and 2B the coupling rod 14 is shown more clearly. At the lower end the head 17 is provided with a sloping surface 59 and at the rear is provided with the annular shoulder 19. The end of compression spring 20 is kept in its place in radial direction by the relatively thickened end part 33 of the stem 23. In the rack part 22 an inclined end surface 34, a flat recessed intermediate surface 35 and a series of teeth 36 with at its distal end a relatively thick end tooth 37 with a pressure surface 37a, as well as a flat end surface 38 can be distinguished. In figure 2B it can furthermore be seen that the part with end surface 38 and teeth 36, 37 is narrower than the consecutive intermediate surface 35, as a result of which a guiding longitudinal edge 39 and a threshold of stop surface 40 is formed.

The pinion 60 shown in figures 3A-3D actually comprises four portions, of which the first is shown in figure 3A on the left-hand side and defines a substantially smooth circular stop surface 25. The stop surface 25 is destined to abut the stop surface 40 in order to prevent further relative rotation between pinion 60 and rack portion 22 and thus unintentional detachment of the coupling end. At stopping the stop surface 25 and thus pinion 60 are prevented to run upwards over the stop surface 40 as a result of the fitting of the pinion 60 in the opening 50 and the fitting of the rack portion 22 in the bore portion 15b. Further rotation of the pinion 60 can only take place when the knob 31 and thus the pinion 60 is pressed in, counter to the pressure force of the torsion compression spring 26, as a result of which the stop surface 25 can move along the stop surface 40.

The stop surface 25 has a portion 44, which is flattened. Furthermore the stop surface 25 is limited at the inside by an edge 69, which contacts the guiding edge 39. It can be seen that the pinion 60 will be kept placed at the side in lateral direction by on the one hand the pressure force which is exerted by the spring 26 and on the other hand the contact of the edge 69 with the guiding edge 39.

The second portion 27 of the pinion 60 comprises a substantially circle-cylindrical wall portion 58, a continuation of flattened stop surface 44, a series of teeth 43 situated at mutual equal distance from each other,a recess 42 and a cam 41. The pitch of the teeth 43 corresponds to the pitch of the teeth 36 on the rack portion 22. The teeth 43 here are situated such with respect to the teeth 36 that the thickened tooth 37 can come to fall within recess 42 and the cam 41 can engage the surface 37a of the thickened tooth 37.

More to the right the pinion 60 is provided with a smooth, circle-cylindrical portion 46. In the drawing of figure 3A seen on its right side the pinion 60 is provided with a circumferential series of teeth 45 arranged at mutual equal distance from each other, which form a gear 28. Said gear 28 and the portion 46 extend in a turning knob assembly, which comprises an attachment plate 30 and a turning knob 31.

Additional security against outward sliding of the pinion 60, when the stop surface 25 has got beyond the stop surface 40 or in the maximally extended position of the coupling rod, which is to still be discussed further, is obtained by the wall 61a, which forms a stop for the portion 27 of the pinion 60.

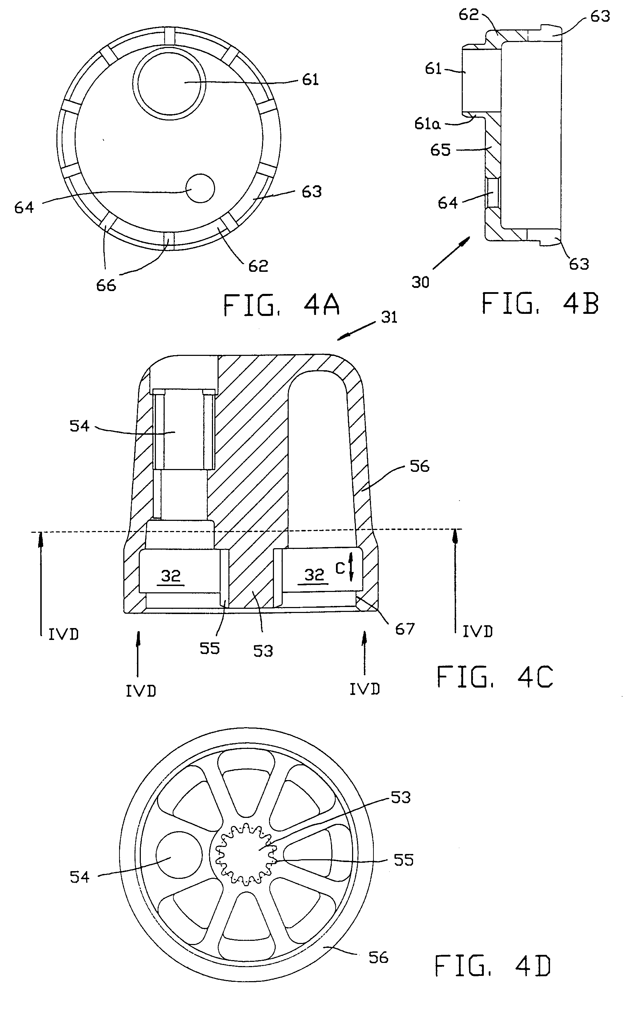

The attachment plate 30 which is shown in the figures 4A and 4B comprises a circular bottom wall 65 which at the edges changes into a cylindrical wall 62, which at the top edge is provided with a number of snap fingers 63 separated from each other by slits 66. The bottom wall 65 is furthermore provided with a hole 64 for an attachment bolt and an opening 61 for receiving the smooth circle-cylindrical portion 46 of the pinion 60.

The turning knob 31, shown in figures 4C and 4D is provided with a circumferential wall 56, which at an end edge is provided with shoulders 67, behind which the snap fingers 63 of the attachment plate 30 can snap. This connection is not detachable. However, pressing in the turning knob 31 is possible. Alternatively a snap ring connection is possible.

In the centre the turning knob 31 is provided with a gear 53 with teeth 55. Around it an annular space 32 is formed with a straight wall for permitting sliding with respect to the snap fingers 63 in direction C. The turning knob 31 is furthermore provided with a through-going bore 54, in which possibly a lock to be operated from the outside with a key can be accommodated a lock pin of which extends in an opening -not further shown- in the end surface of pinion 60, in order to make rotation of the turning knob 31 impossible for unauthorized persons or to prevent pressing in the turning knob 31 and thus the pinion 60 as a result of stopping against the plate 30.

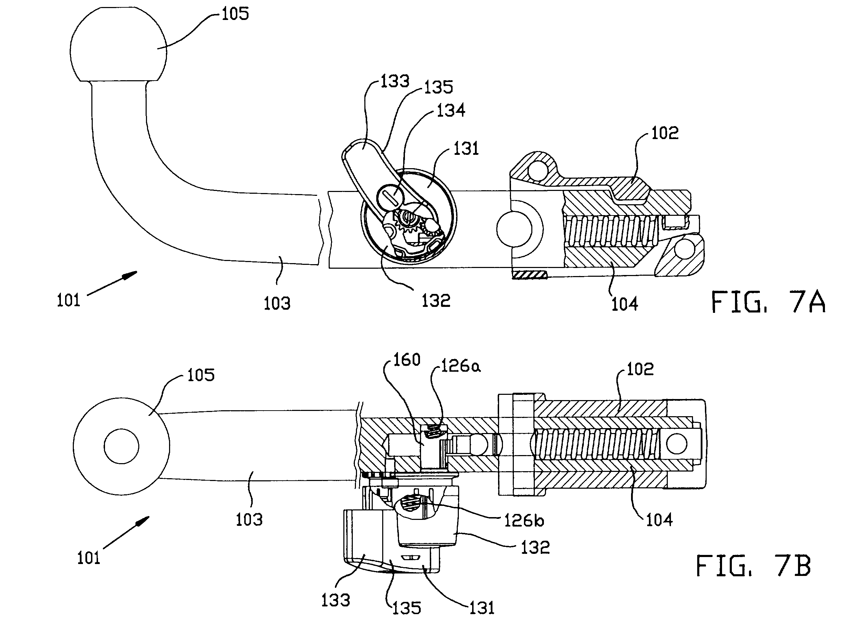

The towing hook assembly 101 shown in figures 7A and 7B substantially corresponds to the one of the preceding figures. The towing hook assembly 101 comprises an attachment part 102 and a towing hook part 103, which at the one end is provided with a towing hook with a ball 105 and has an elongated coupling end 104 at the other end.

In this embodiment the torsion compression spring 26 is replaced by a compression spring 126a and a torsion compression spring 126b, which is centrally beared in the main part 132 of the turning knob 131. There is more space at that location to give room to the spring, so that it can be designed stronger. Moreover a central pressure force is exerted on the turning knob, which promotes the working.

Striking is the altered shape of the turning knob 131. It has a central portion 132 which is circular in cross-section and a tongue 133 extending from it in axial direction to the outside and in radial direction to the outside, which tongue is provided with a gentle concave surface 135, on which the thumb of the operator can be placed. The shape of the tongue 133 is ergonomic adjusted to the grip of the user's hand. The direction of rotation when operating is the same as the one of the towing hook assembly which is discussed before.

The turning knob 132 is furthermore provided with a lock 134 which van be operated by a key, in order to lock its position.

When placing the knob 132 on the towing hook assembly 101, for correctly placing it in the direction of rotation with respect to the pinion 160 and the attachment plate, use can be made of the markings arranged in circumferential direction.

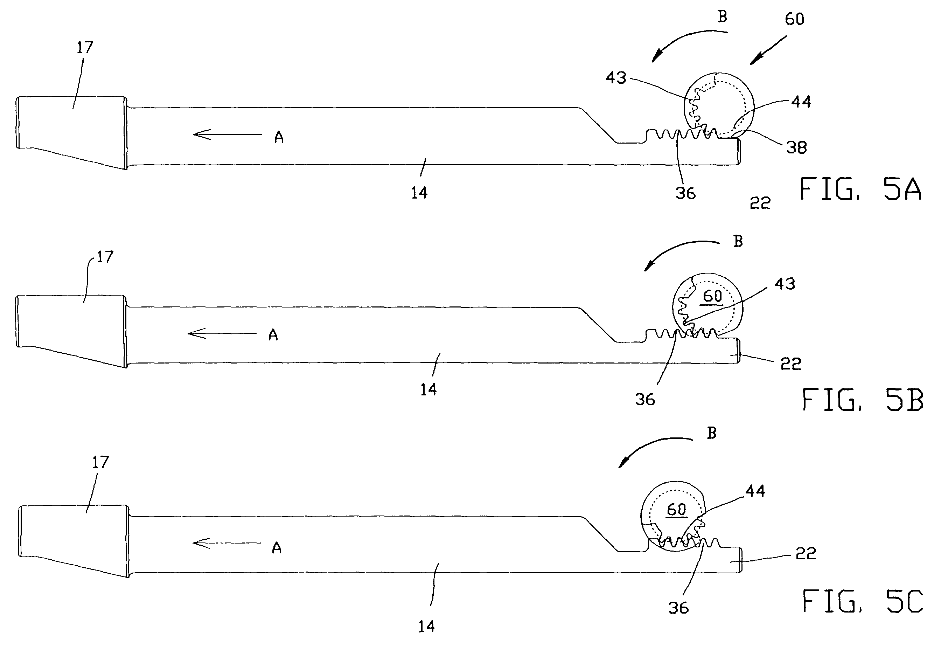

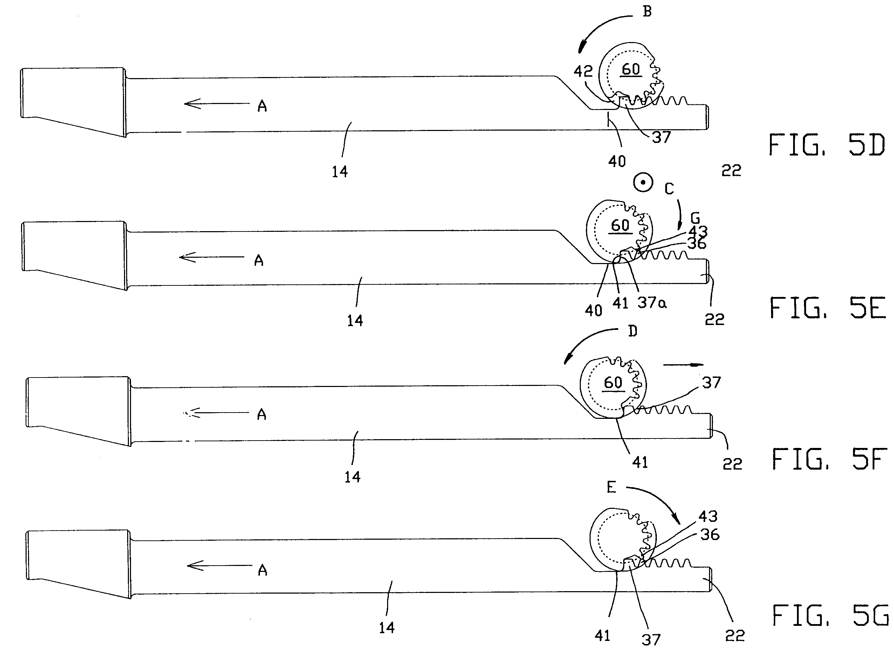

In figure 5A the coupling rod 14 with pinion 60 is shown schematically, in a situation in which the coupling rod 14 is extended to the maximum from the coupling end 4 (which is not shown here). Schematically the working of spring 20 is shown, which exerts a force on the coupling rod 14 in the direction A. In this position extended to the maximum this force can be as large or larger than 90 Newton. The cooperation of the stop surface 44 of the pinion 60 and the flat end surface 38 of the rack portion 22 prevents further movement of the coupling rod 14 to the left. Possibly the end surface 38 can be placed at a level equal to the one of the teeth apexes, in which case the surface 44 of the pinion 60 will be more flattened and situated more to the inside (dotted line in figure 3C).

In figure 5B the coupling rod 14 is in the normal coupled situation of the towing hook assembly, as is shown in the figures 1A and 1B. Because the sloping surface 59 is forced upwards by the sloping surface 11 the coupling end 4 is forced upwards to engage about the threshold 9 with the recess 70. As can be seen in figure 1A the coupling end 4 cannot be retracted anymore. The coupling end 4 is further kept in its place by fitting the transverse pins 16A, 16B in the recesses 8.

When it is intended to take the towing hook member 3 out of the attachment part 2 the turning knob 31 is turned to the left in the direction K with the right hand, which direction is ergonomic advantageous to the user because it corresponds to the movement made when unscrewing a screw or bottle cap. The gear 53 will also rotate in the direction K, and as a result of the engagement of the teeth 55 with the teeth 45 of the pinion 60, the pinion 60 will be rotated in the direction B. As a result of engagement of the teeth 43 on the pinion 60 and the teeth 36 on the rack portion 22 the coupling rod 14 will be retracted, as shown in the figures 5B and 5C. In figure 5D the stop surface 25 has abutted the stop surface 40. When the user indeed wishes to proceed with taking out the towing hook part 3, then he will press in the turning knob 31 counter to the working of the spring 26 in axial direction in the direction C. In this way the surface 25 comes beyond the stop surface 40 and the pinion 60 can be rotated further. Almost simultaneously the last tooth 43 has arrived at the last tooth 36, and as a result of the mutual play between the thickened tooth 37 and the recess 42 the rack rod 14 is moved up in the direction X as a result of the working of the spring 20, in which the shoulder 37a abuts the cam 41 and the pinion is rotated along a little in the direction G. Subsequently the first tooth 43 abuts the first tooth 36, as a result of which further sliding is blocked.

It is noted that it is also possible to first press in turning knob 31 and then to rotate it to retract the coupling rod 14.

With further rotation in the direction D, in which the pinion 60 is further biassed in direction of rotation by rotation compression spring 26, the coupling rod 14 ends up in a completely retracted position, which is limited by the inclined surface 34. In this release position the tensile force of the spring may have increased to for instance 117 Newton or more. The user can now pivot the towing hook part slightly up, so that the recess 70 comes free from the threshold 9 and the towing hook part 3 with the coupling end 4 can be pulled out of the attachment part 2. It will not be necessary here to hold on to the turning knob 31, because extending the coupling rod 14 too far is prevented because the shoulder 37a abuts the cam 41 and the pinion 60 will then rotate along, until the first tooth 43 abuts the first tooth 36 as shown in figure 5G. As a result of this stable retracted position of the coupling rod 14 the user can store the towing hook member 3 in a state in which it can directly, without further special actions, be ready to be placed again.

It will have become clear that when uncoupling the towing hook part 3 from the attachment part 2 the user needs to perform an operation activity with one hand only, with which he both retracts the coupling rod as well as can lock said coupling rod in a retracted position. The left hand is completely free to support the towing hook part 3 during taking out. Said locking means are situated here at such a place that, independent from their relative position with regard to the housing 2, they can automatically become active. The location of said locking means in the coupling end further keeps them free from external influences as a result of which its working will be reliable over a long period of time.

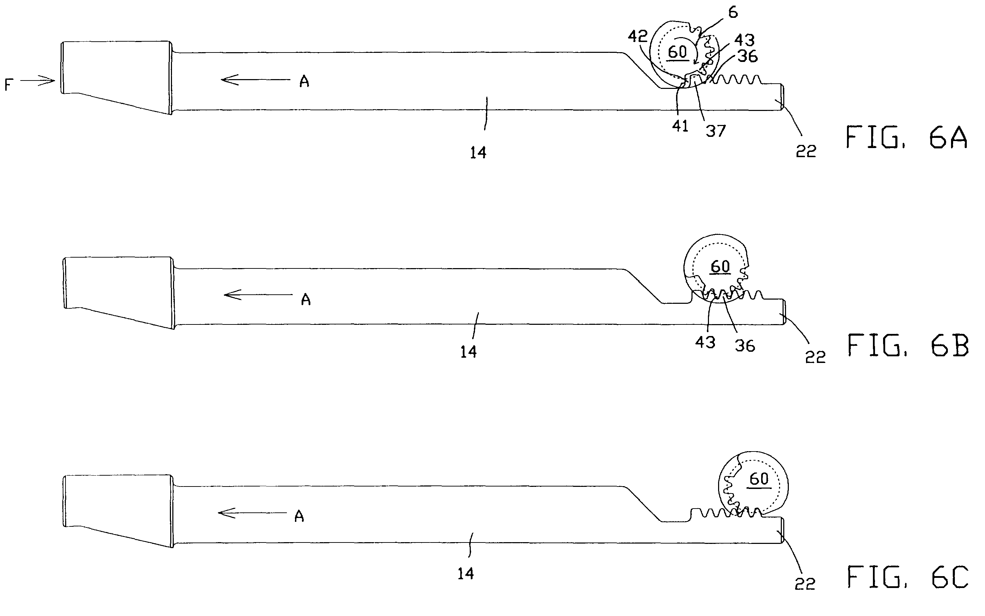

Placing the towing hook member 3 is schematically shown in the figures 6A-6C. The user brings the coupling end 4 in the receiving space 12 if the attachment part 2. When the head 17 abuts the transverse member 10 in order to thus exert a force in the direction F on the head and thus on the coupling rod 14. In this way the coupling rod 14 will be forced somewhat to the rear counter to the working of the spring 20, as a result of which the said abutting teeth 36 and 43 slide a little relative to each other and under the influence of the torsion compression spring 26 the pinion 60 will rotate somewhat in the direction G in order to bring said teeth 43 into the space between the teeth 36 and 37. Almost simultaneously the shoulder returns beyond the stop surface 40 and the torsion compression spring 26 ensures that the edge 69 abuts the guiding edge 39 of the rack part 22 in a guiding manner. The spring 20 ensures that the pinion 60 automatically rotates further in the direction G until the situation shown in figure 6C and in the figures 1A and 1B is reached and the towing hook part 3 is coupled again to the attachment part 2.

The towing hook part 3 can be divided in order to design the hook member 5 in a universal manner and to have the other member comprising the coupling end and the attachment part adjusted to ta certain type of car. When changing the bumper of a certain type of car only a part of the assembly needs to be changed, as a result of which wastage of material is prevented. It is preferred here that said division is situated at the level of the turning knob 31, so that it shields at least a part of the attachment means with which both members are attached to each other. The turning knob 31 itself cannot be removed, with which the attachment means as well are inaccessible to an unauthorized person.

## Claims

1. Hanging or hitching assembly comprising a housing (2) to be attached to a vehicle and having a receiving space (12), as well as a hanging or hitching part (3) with a hanging or hitching member, such as a towing hook (5) and an elongated coupling end (4) at one end which is destined to be secured in a detachable manner in the receiving space, in which at an inner side the housing is provided with first coupling members (9, 10), the coupling end being provided with second coupling members (17, 19) cooperating with the first coupling members, the coupling end being provided with a longitudinal bore (15a, b) and a coupling rod (14) which can be slid therein for bringing and keeping the first and second coupling members in coupling cooperation when in the extended position, the coupling end further being provided with first biassing means (20) for forcing the coupling rod (14) into the extended position, as well as a rack (22), which is in toothed engagement with a pinion (60) arranged in the coupling end, which pinion can be rotated by manual operating means (31), the pinion and/or the rack having portions (41, 42, 43, 36, 37), which can cooperate in keeping the coupling rod in a first retracted position, counter to the first biassing means.

2. Assembly according to claim 1, the portions (42) of the teeth on the rack and the pinion being designed to permit mutual slip over a distance, which distance is such that the teeth (43, 46) of the rack and the pinion then facing each other abut on each other.

3. Assembly according to claim 2, the mentioned distance corresponding to half a pitch of the teeth on the rack.

4. Assembly according to claim 2 or 3, the first biassing means (20) being active for performing the slip movement between the rack and pinion.

5. Towing hook assembly according to claim 2, 3 or 4, further comprising second biassing means (26) for rotating the pinion (60) in a direction, preferably such that the teeth on the pinion are biassed in the direction corresponding to the working direction of the first biassing means.

6. Assembly according to any one of the preceding claims, the coupling rod furthermore being provided with locking means (40) for forming a threshold against unintentional sliding of the coupling rod (14) to a second retracted position beyond the first retracted position.

7. Assembly according to claim 6, the pinion at the end of the teeth being provided with a cam (41) for engaging a pressure surface (37a) on the distal end of the teeth of the rack.

8. Assembly according to claim 6 or 7, the locking means on the coupling rod being formed by a first stop surface (40) at the distal end of the rack, which cooperates with a second stop surface (47) on the pinion, the first and the second stop surface being situated outside of the teeth of the pinion and rack and the pinion being biassed by means of third biassing means (26) to a position in which the first stop surface is in the path of the second stop surface, wherein the pinion can be pressed in counter to the working of the third biassing means in order to bring the path of the second stop surface next to the first stop surface.

9. Assembly according to claim 8, the second stop surface (47) being formed on a circumferential edge (25) which projects from the teeth on the pinion and the rack being provided with an edge for guiding (39) the circumferential edge.

10. Assembly according to any one of the preceding claims, the pinion being provided with a third stop surface (44) at the rear of the teeth, which stop surface cooperates with a fourth stop surface (38) on the proximal end of the rack to define an end position for the fully extended coupling rod.

11. Assembly according to any one of the preceding claims, the manual operating means (31) comprising a turning knob, which is provided with a centric crown gear (53) of which the teeth (55) are in engagement with a second teeth (28) on the pinion (60).

12. Assembly according to claim 11, the turning knob being attached at the right-hand side of the coupling end (4) and the pinion (60) being situated above the rack and on the side of the crown gear (53) facing the receiving space (12).

13. Assembly according to claim 11 or 12, the turning knob (31) being snapped fitted to an attachment plate (30) provided with snap tongues, which plate is secured to the coupling end by means of attachment means (29) ending up under the turning knob.

14. Assembly according to any one of the preceding claims, in which the housing (2) is adapted to be arranged with the receiving space (12) substantially horizontal.

15. Assembly according to claim 5 and 8, the second and third biassing means being formed by one and the same torsion compression spring (26).

16. Hanging or hitching assembly for a vehicle such as a car, comprising a hanging or hitching part (3) and a substantially tubular attachment part (2) destined to be fixedly attached to the vehicle, the hanging or hitching part (3) and the attachment part (2), respectively, being provided with first and second coupling means which cooperate with each other, the first coupling means comprising a coupling member (4), the hanging or hitching part (3) comprising the coupling member (4) and a hanging or hitching member (5) attached to it by means of attachment means.

17. Assembly according to claim 15, provided with a permanent shielding (31) for at least a part of the attachment means.

18. Assembly according to claim 16, in which the shielding is an unlocking knob (31).

19. Hanging or hitching assembly comprising a housing to be attached to a vehicle and having a receiving space, as well as a hanging or hitching part with a hanging or hitching member, such as a towing hook, and at the end an elongated coupling end destined to be secured in the receiving space in a detachable manner, in which at an inner side the housing is provided with first coupling members, the coupling end being provided with second coupling members cooperating with the first coupling members, the coupling end being provided with a longitudinal bore and a coupling rod which can be slid therein for bringing and keeping the first and second coupling members in coupling cooperation when in the extended position, the coupling end further being provided with first biassing means for forcing the coupling rod into the extended position, as well as means to be operated by manual operating means to retract the coupling rod inside counter to the first biassing means, the coupling end being provided with blocking means, for keeping the coupling rod in a first retracted position, which blocking means are adapted to be operated by the same manual operating means.

20. Assembly according to claim 19, the blocking means being entirely integrated within the coupling end (4).

21. Hanging or hitching assembly comprising a housing to be attached to a vehicle and having a receiving space, as well as a hanging or hitching part with a hanging or hitching member, such as a towing hook, and at an end an elongated coupling end destined to be secured in the receiving space in a detachable manner, in which at an inner side the housing is provided with first coupling members, the coupling end being provided with second coupling members cooperating with the first coupling members, the coupling end being provided with a longitudinal bore and a coupling rod which can be slid therein for bringing and keeping the first and second coupling members in coupling cooperation when in the extended position, the coupling end further being provided with first biassing means for forcing the coupling rod into the extended position, as well as means to be operated by manual operating means to retract the coupling rod inside counter to the first biassing means, the coupling rod being provided with blocking means, for keeping the coupling rod in a first retracted position, the blocking means working free from the attachment part.

22. Hanging or hitching assembly comprising an attachment part to be attached to a vehicle, provided with coupling means and a hanging or hitching part, such as a towing hook part, provided with second coupling means, which can be brought in cooperative connection with the first coupling means for detachably attaching the hanging or hitching part in the attachment part, locking means further being provided for locking the coupling of the first and the second coupling means and operating means for the locking means comprising a turning knob protruding sidewards and being attached to the hanging or hitching part, which is operatively connected to the locking means in order to bring it out of the locked position when turning the turning knob counter clockwise, in case of a turning knob protruding on the right-hand side above over and towards the hanging or hitching part.

23. Assembly according to any one of the preceding claims, designed as a towing hook assembly.

24. Assembly, in particular a towing hook assembly, provided with one or more of the characterizing measures as described and shown, respectively, in the attached description and drawings.
